# EUROPÄISCHE PATENTANMELDUNG

(11) **EP 3 425 476 A1**
(43) Veröffentlichungstag der Anmeldung: **09.01.2019**
(21) Anmeldenummer: 17179579.2
(22) Anmeldetag: 04.07.2017
(51) Int. Cl.: G06F 1/16, E05B 17/20, E05B 63/12, E05B 15/00, E05B 73/00

(54) **GEHÄUSE FÜR EINEN COMPUTER MIT EINEM TOUCHSCREEN**

(71) Anmelder: Siemens Aktiengesellschaft, 80333 München (DE)
(72) Erfinder: Daubenmerkl, Christian, 92256 Hahnbach (DE); Hummel, Alfredo, 93133 Burglengenfeld (DE); Krieger, Harald, 91284 Neuhaus (DE); Ringer, Ulrich, 92224 Amberg (DE); Schlichting, Heinrich, 93173 Wenzenbach (DE); Traub, Andreas, 92224 Amberg (DE)

(57) **Zusammenfassung**

Die Erfindung betrifft ein Gehäuse (10) für einen Computer mit einem Touchscreen (3), umfassend einen ersten Gehäuseteil (1) und einen zweiten Gehäuseteil (2), welche zueinander mit einer lösbaren Verbindung verbunden sind, wobei dem ersten Gehäuseteil (1) ein Haltemittel (11,12,13,14) und dem zweiten Gehäuseteil (2) ein Gegenhaltemittel (21,22,23,24) zugeordnet ist, wobei das Gegenhaltemittel (21,22,23,24) ein Sperrmittel (30) aufweist, welches über ein elastisches Element (V) in dem Gegenhaltemittel (21,22,23,24) in einer Verriegelungsposition (V) angeordnet ist und ausgestaltet ist durch Anlegen eines äußeren magnetischen Feldes entgegen einer Spannkraft (F) des elastischen Elements (31) von der Verriegelungsposition (V) in eine Entriegelungsposition (E) bewegt zu werden, wobei bei einem zusammengesetzten Gehäuse (10) das Haltemittel (11,12,13,14) im Gegenhaltemittel (21,22,23,24) angeordnet ist und das Sperrmittel (30) in der Verriegelungsposition (V) das Haltemittel (11,12,13,14) fixiert.

## Beschreibung

Die Erfindung betrifft ein Gehäuse für einen Computer mit einem Touchscreen, umfassend einen ersten Gehäuseteil und einen zweiten Gehäuseteil, welche zueinander mit einer lösbaren Verbindung verbunden sind.

Nach dem allgemeinen Stand der Technik ist es bekannt, zwei Gehäuseteile zu einen Gehäuse beispielsweise mittels Verschraubungen zu verbinden. Auch ist es bekannt, zwei Gehäuseteile zu einen Gehäuse mittels einer Verklebung zu verbinden.

Die erste Variante hat allerdings den Nachteil, dass von außen in dem Gehäuse Schrauben zu sehen sind, was es zu vermeiden gilt. Die zweite Variante hat den Nachteil, dass in einem Reparaturfall das Gehäuse derart aufgebrochen werden muss, dass Schäden am Gehäuse oder der darin enthaltenen Komponenten entstehen.

Der Erfindung liegt die Aufgabe zugrunde, ein schraubenloses Gehäuse anzugeben, welches trotzdem in einem möglichen Reparaturfall für das darin befindliche elektrische Gerät zerstörungsfrei geöffnet werden kann.

Die Aufgabe wird bei einem Gehäuse für einen Computer mit einen Touchscreen aufweisend einen ersten Gehäuseteil und einen zweiten Gehäuseteil, welche zueinander mit einer lösbaren Verbindung verbunden sind, dadurch gelöst, dass dem ersten Gehäuseteil ein Haltemittel und dem zweiten Gehäuseteil ein Gegenhaltemittel zugeordnet ist, wobei das Gegenhaltemittel ein Sperrmittel aufweist, welches über ein elastisches Element in dem Gegenhaltemittel in einer Verriegelungsposition angeordnet ist und ausgestaltet ist, durch Anlegen eines äußeren magnetischen Feldes entgegen einer Spannkraft des elastischen Elementes von der Verriegelungsposition in eine Entriegelungsposition bewegt zu werden, wobei bei einem zusammengesetzten Gehäuse das Haltemittel im Gegenhaltemittel angeordnet ist und das Sperrmittel in der Verriegelungsposition das Haltemittel fixiert. Mit dieser Ausgestaltung hat man vorteilhafterweise ein Gehäuse geschaffen, welches auf Schraubverbindungen, welche von außen zu sehen sind, verzichtet, aber dennoch für einen Reparaturfall durch Anlegen eines magnetischen Feldes wieder geöffnet werden kann.

In einer weiteren Ausgestaltung der Erfindung ist das Haltemittel in einer Trägerplatte angeordnet, und die Trägerplatte an einer Innenseite des ersten Gehäuseteils angeordnet, wobei das Gegenhaltemittel an einer Innenseite des zweiten Gehäuseteils angeordnet ist. Mit Einführung der Trägerplatte ist eine Möglichkeit geschaffen worden, die Haltemittel in der Trägerplatte zu positionieren und zusätzlich an die Trägerplatte die Komponenten, wie Display, Touchscreen und erstes Gehäuseteil zu befestigen.

Die Gegenhaltemittel sind dementsprechend in den zweiten Gehäuseteil, beispielsweise mit Halterungen, verbunden.

In einer weiteren Ausgestaltung weist das Sperrmittel in Gegenhaltemittel eine konische Hülse und einen Kugelkäfig mit Kugeln auf, wobei das Haltemittel einen Stift mit einer umlaufenden Einkerbung aufweist, wobei die Kugeln in der Verriegelungsposition in der Einkerbung liegen.

Die Erfindung wird nachstehend im Zusammenhang mit den Zeichnungen beschrieben. Es zeigen
- FIG 1: einen tragbaren mobilen Computer mit einem Touchscreen,
- FIG 2: einen Gehäuseteil des Gehäuses (Unterteil),
- FIG 3: eine Trägerplatte,
- FIG 4: einen Schnitt durch das Gehäuse,
- FIG 5: einen weiteren Gehäuseteil (Oberteil),
- FIG 6: das Oberteil in einer anderen Ansicht,
- FIG 7: das Oberteil mit eingeschraubter Trägerplatte,
- FIG 8: das Zusammenspiel von Haltemittel und Gegenhaltemittel,
- FIG 9: eine Demontagevorrichtung für einen mobilen Computer mit einem Touchscreen, und
- FIG 10: einen Schnitt durch das Gegenhaltemittel mit verrasteten Haltemittel.

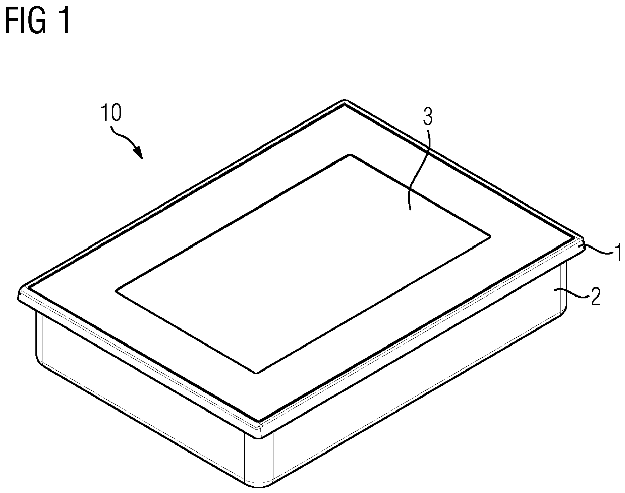

Gemäß FIG 1 ist ein mobiler tragbarer Computer mit einem Touchscreen 3 dargestellt. Ein Gehäuse 10 des Computers umfasst einen ersten Gehäuseteil 1 und einen zweiten Gehäuseteil 2.

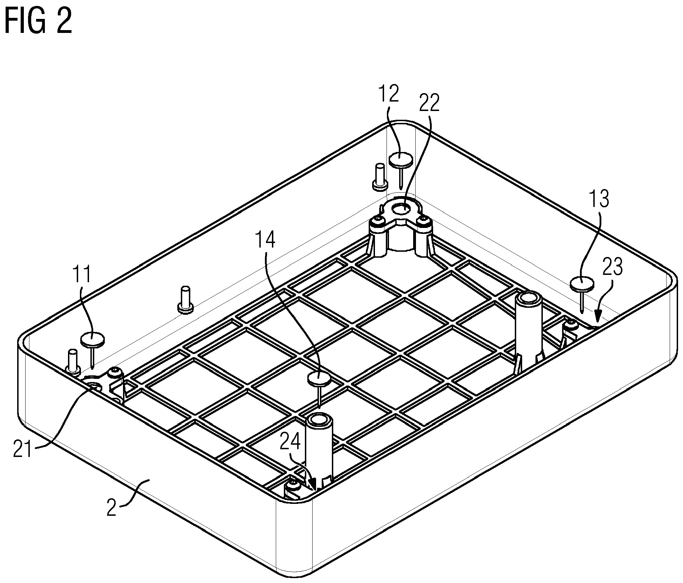

Die FIG 2 zeigt in einer dreidimensionalen Darstellung den zweiten Gehäuseteil 2. Dem zweiten Gehäuseteil 2 sind für die lösbare Verbindung Gegenhaltemittel 21,22,23,24 zugeordnet. Das zweite Gehäuseteil 2 weist für eine Arretierung der Gegenhaltemittel 21,22,23,24 jeweils einen Dom auf, wie er beispielsweise in Kunststoffspritztechnik hergestellt werden kann. Dabei ist in den Domen jeweils ein erstes Gegenhaltemittel 21, ein zweites Gegenhaltemittel 22, ein drittes Gegenhaltemittel 23 und ein viertes Gegenhaltemittel 24 angeordnet. Die Gegenhaltemittel 21,22,23,24 werden mittels einer Ringplatte in den Domen gehalten und die Ringplatte ist wiederum mit Schrauben an innenliegenden Gewindelöchern in den zweiten Gehäuseteil 2 verschraubt.

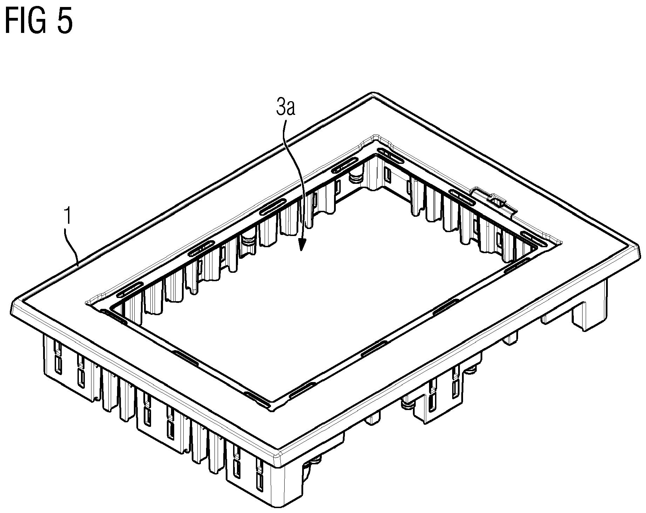

Zum Verbinden des ersten Gehäuseteils 1 (siehe FIG 5) ist dem ersten Gegenhaltemittel 21 ein erstes Haltemittel 11, dem zweiten Gegenhaltemittel 22 ein zweites Haltemittel 12, dem dritten Gegenhaltemittel 23 ein drittes Haltemittel 13 und dem vierten Gegenhaltemittel 24 ein viertes Haltemittel 14 zugeordnet.

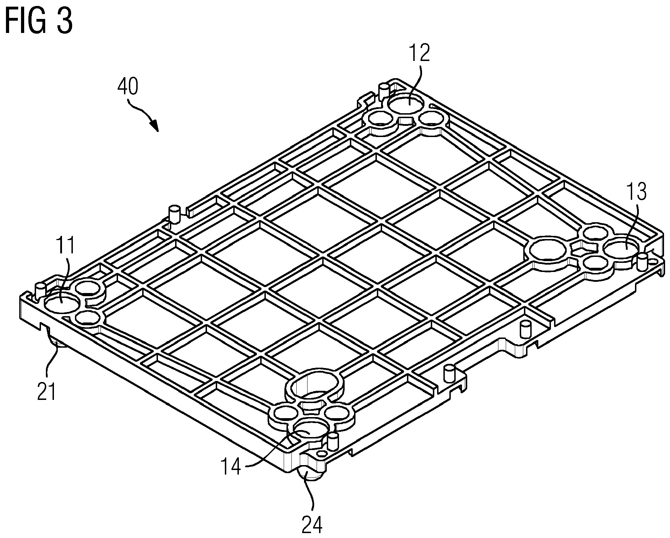

Die Haltemittel 11,12,13,14 sind gemäß FIG 3 letztendlich in einer Trägerplatte 40 angeordnet. An die Trägerplatte 40 kann das erste Gehäuseteil 1 angeschraubt werden, wobei dadurch, dass erste Gehäuseteil 1 mit dem zweiten Gehäuseteil 2 über die lösbare Verbindung verbunden wird.

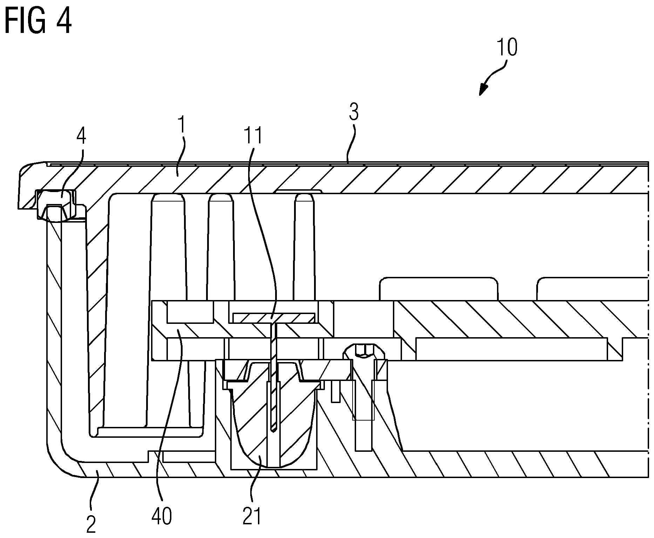

Die FIG 4 zeigt eine Schnittdarstellung durch das Gehäuse 10, wobei das Gehäuse 10 einen umlaufenden Rand aufweist und zwischen dem ersten Gehäuseteil 1 und dem zweiten Gehäuseteil 2 eine Dichtung 4 angeordnet ist. Im Inneren des Gehäuses 10 ist ungefähr mittig die Trägerplatte 40 angeordnet. Da durch die Trägerplatte 40 das erste Gegenhaltemittel 21 hindurchgesteckt wird und mit einem Teller die Trägerplatte 40 herunterdrückt, kann mit dem ersten Gegenhaltemittel 21 eine entsprechende lösbare Verbindung des ersten Gehäuseteils 1 und des zweiten Gehäuseteils 2 realisiert werden.

Mit der FIG 5 ist der erste Gehäuseteil 1, also der Oberteil des Gehäuses 10, dargestellt. Der Oberteil des Gehäuses 10 weist eine Öffnung 3a für einen Touchscreen auf.

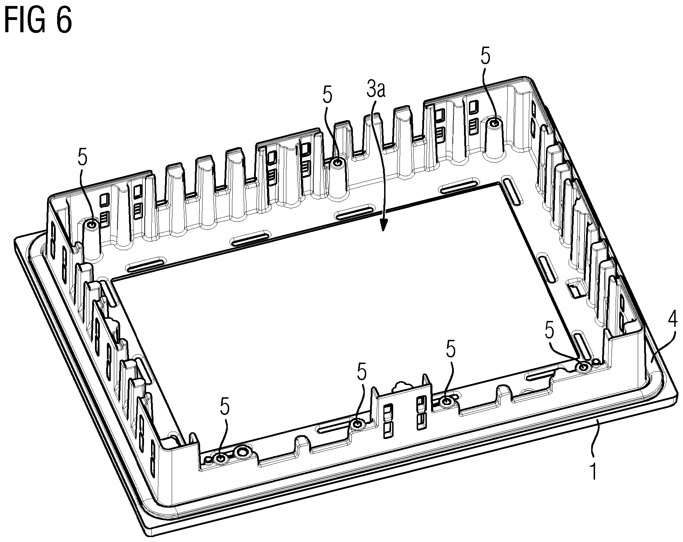

In der FIG 6 ist das in FIG 5 gezeigte erste Gehäuseteil 1 in einer gedrehten Darstellung gezeigt. Nun hat man Blick auf Anschraubpunkte 5 für die Trägerplatte 40. Die Anschraubpunkte 5 sind im Randbereich des ersten Gehäuseteils 1 verteilt, so dass man ungefähr mittig die Trägerplatte 40 in das erste Gehäuseteil 1, also in das Oberteil des Gehäuses 10, einschrauben kann.

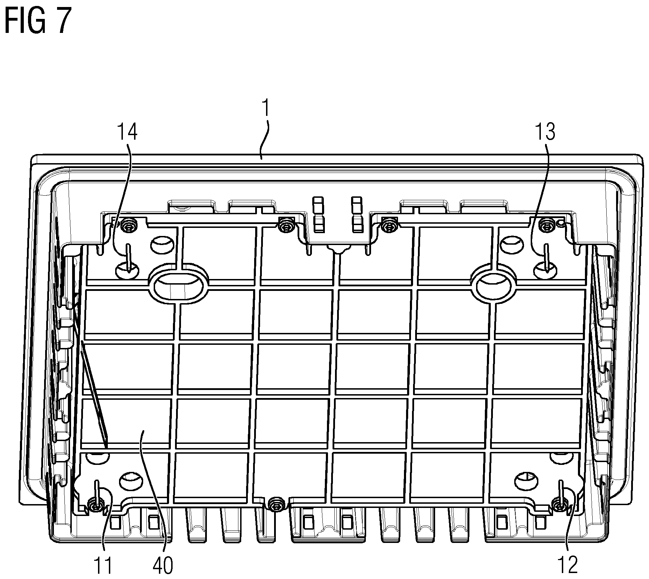

In FIG 7 ist die eingeschraubte Trägerplatte 40 in das erste Gehäuseteil 1 zu sehen. Auch sind die durch die Trägerplatte 40 herausragenden Stifte 35 der Haltemittel 11,12,13,14 zu sehen.

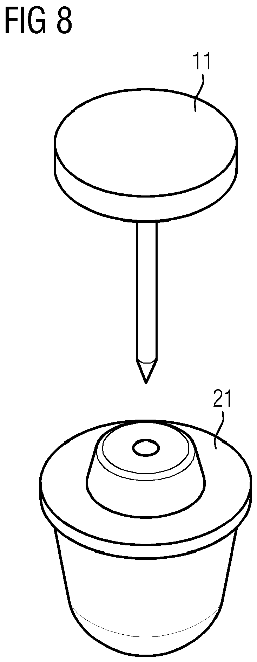

Die FIG 8 zeigt schematisch die Funktion von Haltemittel 11 und Gegenhaltemittel 21 für eine lösbare Verbindung. Taucht der Stift des Haltemittels 11 in das Gegenhaltemittel 21 ein, so wird er in einer Verriegelungsposition V verrasten.

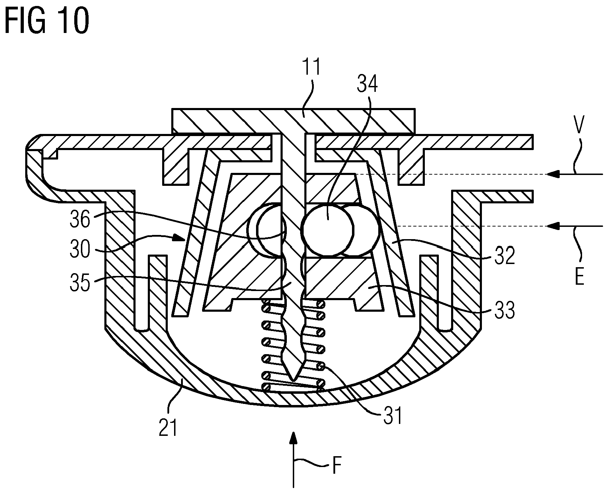

Die FIG 10 zeigt dabei eine detailliertere Darstellung von Haltemittel 11 und Gegenhaltemittel 21. Das Gegenhaltemittel 21 weist ein Sperrmittel 30 auf, das Sperrmittel 30 umfasst eine konische Hülse 32 und einen Kugelkäfig 33 mit Kugeln 34. Der Kugelkäfig 33 wird mittels eines elastischen Elementes 31, beispielsweise eine Spiralfeder, in einer Verriegelungsposition V gehalten. Wird von oben ein Haltemittel 11 in das Gegenhaltemittel 21 eingesteckt, so wird die Spannkraft F der Feder überwunden und das Haltemittel 11 rastet in einer Verriegelungsposition V durch eine umlaufende Einkerbung 36 in einen Stift 35 des Haltemittels 11 ein.

Will man nun das fixierte Haltemittel 11 wieder lösen, so muss von außen ein magnetisches Feld angelegt werden, welches auf den Kugelkäfig 33 wirkt, dabei wird der Kugelkäfig 33 entgegen der Spannkraft F der Feder von der Verriegelungsposition V in eine Entriegelungsposition E bewegt. In der Entriegelungsposition E kann das Haltemittel 11 mit seinem Stift 35 aus dem Gegenhaltemittel 21 herausgezogen werden.

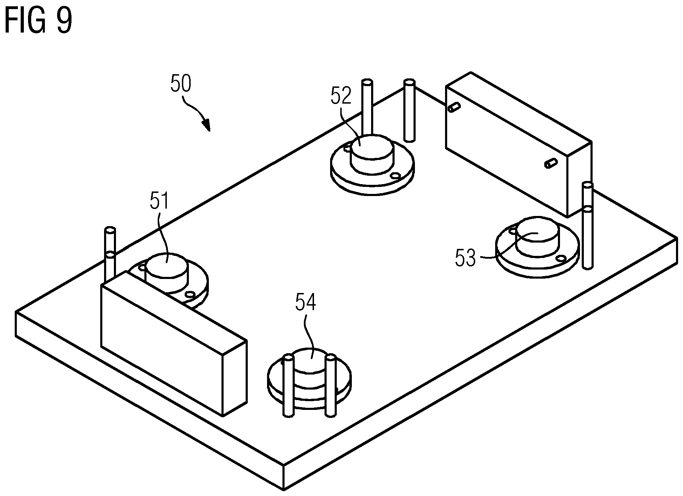

Das bedeutet, bezogen auf das Gehäuse 10 mit seinem ersten Gehäuseteil 1 und seinem zweiten Gehäuseteil 2 können der erste Gehäuseteil 1 und der zweite Gehäuseteil 2 bei Einlegen des Gehäuses 10 in eine Demontagevorrichtung 50 gemäß FIG 9 der erste Gehäuseteil 1 und der zweite Gehäuseteil 2 zerstörungsfrei voneinander getrennt werden. Dazu weist die Demontagevorrichtung 50 einen ersten Magnet 51, einen zweiten Magnet 52, einen dritten Magnet 53 und einen vierten Magnet 54 auf.

## Patentansprüche

1. Gehäuse (10) für einen Computer mit einem Touchscreen (3), aufweisend einen ersten Gehäuseteil (1) und einen zweiten Gehäuseteil (2), welche zueinander mit einer lösbaren Verbindung verbunden sind,
**dadurch gekennzeichnet, dass** dem ersten Gehäuseteil (1) ein Haltemittel (11,12,13,14) und dem zweiten Gehäuseteil (2) ein Gegenhaltemittel (21,22,23,24) zugeordnet ist, wobei das Gegenhaltemittel (21,22,23,24) ein Sperrmittel (30) aufweist, welches über ein elastisches Element (V) in dem Gegenhaltemittel (21,22,23,24) in einer Verriegelungsposition (V) angeordnet ist und ausgestaltet ist durch Anlegen eines äußeren magnetischen Feldes entgegen einer Spannkraft (F) des elastischen Elements (31) von der Verriegelungsposition (V) in eine Entriegelungsposition (E) bewegt zu werden, wobei bei einem zusammengesetzten Gehäuse (10) das Haltemittel (11,12,13,14) im Gegenhaltemittel (21,22,23,24) angeordnet ist und das Sperrmittel (30) in der Verriegelungsposition (V) das Haltemittel (11,12,13,14) fixiert.

2. Gehäuse (10) nach Anspruch 1,
**dadurch gekennzeichnet, dass** das Haltemittel (11,12,13,14) in einer Trägerplatte (40) angeordnet ist und die Trägerplatte (40) an einer Innenseite des ersten Gehäuseteils (1) angeordnet ist, wobei das Gegenhaltemittel (21,22,23,24) an einer Innenseite des zweiten Gehäuseteils (2) angeordnet ist.

3. Gehäuse (10) nach Anspruch 1 oder 2,
**dadurch gekennzeichnet, dass** das Sperrmittel (30) im Gegenhaltemittel (21,22,23,24) eine konische Hülse (32) und einen Kugelkäfig (33) mit Kugeln (34) aufweist, wobei das Haltemittel (11,12,13,14) einen Stift (35) mit einer umlaufenden Einkerbung (36) aufweist, wobei die Kugeln (34) in der Verriegelungsposition (V) in der Einkerbung (36) liegen.
